# DEMANDE DE BREVET EUROPEEN

(11) **EP 1 017 213 A1**
(43) Date de publication de la demande: **05.07.2000**
(21) Numéro de dépôt: 99402638.3
(22) Date de dépôt: 25.10.1999
(51) Int. Cl.: H04M 3/42

(54) **Procédé de gestion de communications téléphoniques**

(30) Priorité: 31.12.1998 FR 9816709
(71) Demandeur: ALCATEL, 75008 Paris (FR)
(72) Inventeur: Bastide, Patrick, 78380 Bougival (FR)
(74) Mandataire: Sciaux, Edmond

(57) **Abrégé**

Pour proposer un confort d'utilisation habituel rencontré avec un autocommutateur (1) perfectionné à un interlocuteur (c, C) situé en dehors (24, 25) de l'environnement de cet autocommutateur, on prévoit de modifier des informations de gestion (18) relatives à une communication en cours. Dans ce cas on indique dans des informations relatives à une signalisation de communication des informations liées à une liaison physique (27, 28) réellement établie alors que normalement les informations mémorisées sont relatives à une liaison (26) qui est déroutée (10) et qui est donc en principe au repos. On montre qu'en agissant ainsi on donne à distance tout le confort octroyé par un autocommutateur sans avoir à effectuer de grandes modifications du fonctionnement de cet autocommutateur.

## Description

La présente invention a pour objet un procédé de gestion de communications téléphoniques utilisable en particulier avec un autocommutateur privé, encore qu'une utilisation avec un autocommutateur public soit envisageable également. Le but de l'invention est de mettre à la disposition d'un utilisateur, quel que soit l'endroit où il se trouve, des facilités de travail dont il dispose quand il est dans un environnement de télécommunication complet, cet environnement comportant notamment un réseau informatique avec des terminaux, des ordinateurs personnels reliés par ailleurs à un serveur spécialisé dans la gestion des communications téléphoniques.

Dans le domaine des communications téléphoniques avec des autocommutateurs privés, on constate deux axes de développement. Un premier axe concerne les services auxquels un autocommutateur privé (ou public) donne accès. Notamment avec un autocommutateur perfectionné il est possible de mémoriser dans des mémoires de cet autocommutateur des options de mains libres relatives à un téléphone. Ceci signifie que chaque fois qu'un téléphone sera appelé, le décrochage sera automatique et l'écoute sera basculée en mode amplifiée de façon à ce que la personne appelée n'ait pas même à décrocher son téléphone pour répondre.

On connaît par ailleurs des options de renvoi permettant d'informer l'autocommutateur de ce que l'utilisateur d'un téléphone sera accessible dans l'environnement d'un deuxième téléphone et non pas dans celui d'un premier téléphone qui est normalement celui qui lui est attribué.

On connaît également des facilités d'annuaire, notamment d'annuaire commun à un ensemble de téléphones. Pour utiliser un annuaire on fait défiler sur un écran du téléphone des noms d'interlocuteurs à joindre. On provoque ensuite la communication avec l'un de ceux-ci en le sélectionnant. L'autocommutateur se charge de la numérotation et de toutes les opérations nécessaires.

On connaît encore les services relatifs à des rappels automatiques qui peuvent être de deux types. Soit alors qu'un utilisateur est en communication, et qu'il reçoit un deuxième appel, l'appelant est appelé par cet utilisateur dès la fin de sa conversation. Soit une sonnerie est adressée à l'appelant pour que celui-ci puisse à la fin de cette conversation chercher à nouveau à joindre l'appelé.

Dans un système de traitement de la parole, il est également connu de remplacer un renvoi par un accès à une boîte vocale. Il est possible par ailleurs de changer dans la boîte vocale un message d'invitation par un autre message. Dans ce domaine de traitement de la parole, il est également possible d'organiser des conférences à trois interlocuteurs sur une même ligne. Il est encore possible d'enregistrer, au cours d'une conversation, les propos échangés de manière à les écouter à nouveau à tête reposée ultérieurement.

Enfin, notamment pour les entreprises qui disposent de sites d'exploitation distants les uns des autres, il peut être prévu qu'une communication emprunte préférentiellement une ligne téléphonique dédiée (par exemple du type loué à l'année) plutôt qu'une ligne d'un réseau public (payante supplémentairement).

Ainsi de multiples services sont accessibles à partir du moment où on dispose d'un autocommutateur capable de gérer de telles facilités.

Dans un deuxième axe de développement, il a été prévu de remplacer un dispositif d'affichage d'un téléphone par un écran d'un ordinateur personnel mis à la disposition des interlocuteurs. En effet, notamment quand le téléphone utilisé est un téléphone mobile, l'écran du téléphone n'est pas visible, sauf en cas d'écoute amplifiée, puisque l'utilisateur porte pendant la communication le téléphone à son oreille. Il ne peut donc pas voir le dispositif d'affichage du téléphone. En outre les dispositifs d'affichage des téléphones sont petits, et ne permettent d'afficher qu'un nombre limité de lignes, par exemple quatre ou six lignes au maximum. Plutôt que d'utiliser de tels dispositifs dont l'exiguïté ne pouvait être compensée que par l'apprentissage par l'utilisateur de protocoles d'utilisation assez compliqués, on a eu recours à des affichages sur des écrans d'ordinateurs personnels de menus d'utilisation d'un téléphone. Tout se passe comme si on montrait sur cet écran toutes les options disponibles avec un téléphone, fixe ou mobile. Ces options sont gérées par l'autocommutateur. Il existe donc une liaison entre l'autocommutateur et ces ordinateurs personnels, la plupart du temps par l'intermédiaire d'un réseau informatique auquel l'autocommutateur est aussi relié.

Dans ce cas on utilise par ailleurs l'ordinateur personnel, avec son clavier ou sa souris, pour provoquer des actions souhaitées. Il est ainsi beaucoup plus facile de pointer une souris sur un écran, et de cliquer par exemple dans une option d'enregistrement de la communication en cours, que de se livrer, pendant la communication, à une séquence de touches avec le clavier du téléphone pour pourvoir aboutir à la même opération exécutée par l'autocommutateur. Une telle opération nécessite par ailleurs de connaître par coeur la séquence.

Un tel confort d'utilisation conduit bien entendu à une augmentation de la productivité des utilisateurs, ceux-ci pouvant s'échanger de manière très souple et très puissante des informations de toutes natures avec une grande qualité de compréhension mutuelle.

Autant ce type d'utilisation tend à se répandre et à satisfaire les intéressés dans le milieu de l'entreprise, là où existe un autocommutateur, autant de telles facilités ne sont pas disponibles lorsque les intéressés sont chez eux. De même lorsqu'ils sont à l'hôtel ou en déplacement de telles facilités ne sont pas accessibles. En effet, seules certaines des options citées ci-dessus restent accessibles alors que d'autres ne le sont plus. Par exemple, lorsqu'on utilise un téléphone dans un environnement confortable cité ci-dessus, on peut savoir si l'interlocuteur qu'on cherche à joindre est déjà en communication, avant même de chercher à le joindre. De l'extérieur ceci n'est pas vraiment possible. Il faut lancer la communication téléphonique pour découvrir si elle va aboutir ou non. Dans le cadre du télétravail, du travail à domicile institué comme mode principal de travail pour certains travailleurs, la disposition d'une telle palette de services est cependant une nécessité.

Pour disposer de certains de ces services, il est connu de se livrer à des séquences de touches sur le clavier d'un téléphone distant de manière à provoquer par l'autocommutateur l'exécution d'options choisies. Dans la pratique, certains de ces choix ne peuvent être que préalables à l'établissement d'une communication. Ainsi pour enregistrer une communication avec un interlocuteur, l'appelant doit d'abord se connecter à l'autocommutateur, et répondre aux différentes questions qui lui sont posées par une boîte vocale de manière à sélectionner, progressivement, en fonction des choix possibles le mode de fonctionnement dans lequel il veut que soit établie la communication. Par exemple pour pouvoir enregistrer une conversation, il devra choisir parmi les options présentées une option MENU, dans l'option MENU il devra choisir une option ENREGISTREMENT, dans l'option ENREGISTREMENT il devra choisir une option CONVERSATION ECHANGEE et ainsi de suite. Tous ces choix résultent en pratique de question qui sont posées par la boîte vocale et auxquelles l'appelant répond en appuyant sur une des touches du téléphone.

En pratique le choix d'un mode de fonctionnement peut durer ainsi de l'ordre de 1 à 2 minutes. Si ensuite la communication est lancée, et qu'on se rend compte que l'interlocuteur souhaité n'est pas disponible, parce qu'il est déjà occupé par une autre conversation téléphonique, ou parce qu'il est absent, tout le travail de choix aura été fait en pure perte. Il devra être recommencé à la tentative suivante. C'est très fastidieux et, sauf cas exceptionnel, ce type de service n'est pas très utilisé lorsque l'appelant n'est pas dans un environnement confortable de son lieu de travail.

Il est connu par ailleurs de connecter un ordinateur personnel sur un réseau d'une entreprise, et notamment d'aboutir au système de gestion des communications. On peut dans ce cas provoquer un déroutage d'une communication adressée à un téléphone d'un utilisateur, celui qui est sur son bureau dans cette entreprise, à un téléphone correspondant à son domicile. Le problème présenté par ce type de solution est que le téléphone du bureau de l'utilisateur reste raccroché, et que l'autocommutateur utilise cette information de raccrochage pour sa gestion. Donc, d'une part l'interlocuteur distant ne dispose pas de tout le confort voulu, et d'autre part l'autocommutateur exécute en ce qui concerne le poste dérouté un fonctionnement dégradé.

L'invention a pour objet de remédier à ces problèmes d'une manière très simple. En effet selon l'invention, la solution apportée ne comporte pas de modification de l'autocommutateur. De cette manière, la situation de déroutage de communications ne conduit pas à un traitement particulier qu'il serait nécessaire de développer, d'imaginer et de réaliser pour donner tout le confort d'utilisation à l'utilisateur distant. Selon l'invention, on modifie le contenu d'une mémoire de gestion de l'autocommutateur. En effet, dans un tel autocommutateur il existe une mémoire qui associe d'une part un téléphone à un terminal, un ordinateur personnel la plupart du temps. L'adresse du terminal dans un réseau informatique et le numéro de téléphone attribué au poste téléphonique associé sont ainsi deux termes d'un enregistrement relatif à cette association. Cet enregistrement comporte d'autre part des informations d'état du téléphone : état raccroché, état occupé, état mains libres souhaité, enregistrement de communications, et ainsi de suite. Cet enregistrement comporte enfin, d'une manière optionnelle, des informations indicatives. Celles-ci sont notamment le nom de la personne qui répond normalement au téléphone ainsi que diverses informations à caractère professionnel ou privé. Certaines de ces informations peuvent par ailleurs être filtrées avant d'être affichées sur les terminaux.

Dans l'invention lorsqu'on déroute une communication on remplace tout simplement dans cette mémoire les informations d'état du téléphone qui est dérouté par des informations d'état du téléphone qui reçoit et qui est réellement destinataire de la communication.

L'invention a donc pour objet un procédé de gestion de communications téléphoniques dans lequel
- on associe dans une mémoire d'un système de gestion un premier terminal avec un premier téléphone,
- on affiche sur un écran du premier terminal des options de fonctionnement du premier téléphone,
- on choisit avec un clavier de commande du premier terminal un mode de fonctionnement du premier téléphone correspondant à une option, et
- on gère une communication du premier téléphone en fonction d'un mode choisi,
caractérisé en ce que
- on déroute une communication téléphonique destinée au premier téléphone vers un deuxième téléphone, et
- on remplace dans la mémoire du système de gestion des informations d'état du premier téléphone par des informations d'état du deuxième téléphone.

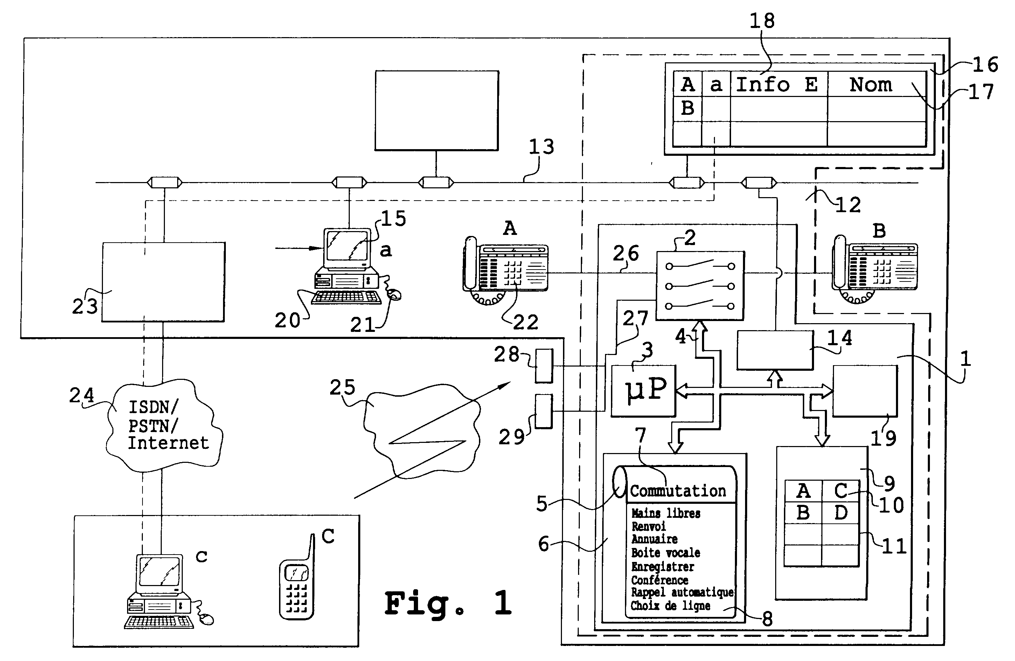

L'invention sera mieux comprise à la lecture de la description qui suit et à l'examen de la figure qui l'accompagne. Celles-ci ne sont présentées qu'à titre indicatif et nullement limitatif de l'invention. La figure 1 unique montre un système de communication utilisable pour mettre en oeuvre le procédé de gestion de communications selon l'invention.

La figure 1 montre un système de gestion des communications téléphoniques. Ce système comporte un autocommutateur 1 susceptible d'organiser des communications entre des postes téléphoniques A, B et d'autres qui lui sont reliés. L'autocommutateur 1 comporte dans ce but des circuits 2 de commutation. Les circuits 2 de commutation sont reliés à un microprocesseur 3 par l'intermédiaire d'un bus 4 de données, d'adresses et de commandes qui exécute un programme 5 contenu dans une mémoire programme 6.

Le programme 5 comporte essentiellement un jeu 7 d'instructions de commutation pour organiser la connexion des postes téléphoniques A à des postes téléphoniques B, à la demande des utilisateurs. Le programme 5 comporte encore un jeu 8 de sous programme permettant, comme indiqué précédemment des utilisations confortables, de mains libres, de renvoi, d'annuaire, de boîte vocale, d'enregistrement, de conférence, de rappel automatique, de choix de lignes ou autres. Tous les sous-programmes du jeu 8 sont utilisables par les postes téléphoniques A et B. Eventuellement certaines utilisations peuvent être limitées à certains postes selon une hiérarchie de droits de type connu.

L'autocommutateur 1 comporte par ailleurs une mémoire de données 9 pour comporter des informations relatives à des utilisateurs. La mémoire 9 comporte notamment des enregistrements 10 d'une table de correspondance 11 permettant des reroutages. Ainsi la table 10 montre que, lorsqu'un téléphone appelle le poste B les circuits de commutation 2 devront appeler le poste B. Par contre lors de l'appel du poste A par un interlocuteur quelconque, les communications devront être déroutées sur un poste C.

L'autocommutateur 1 fait partie intégrante d'un système de gestion 12 relié par un bus 13 à des terminaux, notamment des ordinateurs personnels tels que l'ordinateur personnel a. Pour entrer en relation avec le bus 13, l'autocommutateur 1 possède une interface 14 capable de mettre en forme, selon un protocole accepté par le bus 13, des informations à afficher sur des écrans 15 des terminaux. Le système de gestion comporte essentiellement une mémoire 16 dans laquelle est enregistrée une table de correspondance qui permet d'associer, dans des enregistrements 17, des numéros de téléphone de téléphones A et des adresses sur le bus 13 de l'ordinateur personnel a associé respectivement à un poste téléphonique joignable par le numéro du téléphone A. Physiquement, le terminal a et le téléphone A sont à portée de main d'un même utilisateur. Un enregistrement 17 comporte également dans une zone 18 des informations de l'état du téléphone A. Dans une zone 19 il peut comporter des informations indicatives relatives au nom ou à d'autres caractéristiques de la personne qui utilise normalement le téléphone A.

En utilisation en système fermé, dans le cadre d'une entreprise, des options correspondant au sous-programme du jeu 8 de sous-programmes sont affichées sur les écrans 15, de même que certaines informations de la mémoire 9 et que des informations de l'enregistrement 17 de la mémoire 16.

On a montré sur la figure 1 que la mémoire 16 était une mémoire indépendante. Elle peut notamment être contenue dans un serveur de données connecté au bus 13. De même les sous-programmes du jeu 8 peuvent être contenus également dans une mémoire externe à l'autocommutateur 1. Cependant de préférence les mémoires 9 et 16 font partie intégrante de l'autocommutateur 1 parce que ces sous-programmes du jeu 8 renvoient à des commandes de périphériques 19 de cet autocommutateur 1, tels que des périphériques d'enregistrement.

Dans ce cas la mémoire 16 peut être associée à un microprocesseur, non représenté, susceptible d'entrer en relation et de se partager le travail avec le microprocesseur 3.

Dans tous les cas on aboutit à ce que l'écran 15 montre des options et permet de choisir un mode de fonctionnement du téléphone A. Ce choix est organisé notamment avec le clavier 20 ou une souris 21, ou un autre organe de commande du terminal a. Eventuellement, des touches de commande 22 du téléphone A ont un même effet et permettent de choisir certaines ou toutes les options présentées à l'écran. Lorsqu'une option de fonctionnement est ainsi choisie, par exemple une option mains libres, le téléphone A se met en mains libres. Autrement dit lorsque le téléphone A sonne, parce que B appelle A, l'utilisateur du téléphone A peut simplement cliquer avec la souris 21 sur l'option MAINS LIBRES, ou appuyer sur la touche correspondante du clavier 22 pour obtenir une écoute mains libres. S'il clique avec la souris 21, des informations préenregistrées dans l'enregistrement 10 de la mémoire 9, ou l'enregistrement 17 de la mémoire 16, relatifs au téléphone A permettent à l'autocommutateur 1 de télécommander le téléphone A et de faire en sorte que la communication en mains libres soit automatique. Il en va de même pour les autres options.

Dans l'invention, l'utilisateur du téléphone A n'est pas à son travail, n'est pas dans l'environnement dans lequel il jouit à la fois d'un téléphone A et d'un terminal a dont les caractéristiques sont associées dans un enregistrement 17 d'une mémoire 16. Il est par exemple chez lui ou à l'hôtel. Il dispose dans cet autre endroit d'un téléphone C et d'un terminal c, par exemple là aussi un ordinateur personnel. Selon l'invention, avec l'ordinateur personnel c, l'utilisateur peut se connecter, notamment via un réseau 24 de transmission de données numériques, ou via le réseau Internet, à un point d'accès 23 au bus 13 du réseau interne à l'entreprise. Lors de cette connexion, il lui sera demandé de manifester son admissibilité par la composition de codes secrets qu'il connaît et qui lui permettent à lui seul d'entrer en connexion avec l'autocommutateur 1. Dans ce cas avec l'ordinateur personnel c, l'utilisateur modifie l'enregistrement 10 pour dérouter les communications adressées au téléphone A en des communications adressées au téléphone C. L'enregistrement 10 comporte alors la correspondance A C. Il est possible de provoquer ce déroutage d'une autre façon, notamment avec le téléphone C et en entrant en relation avec l'autocommutateur 1, par l'intermédiaire d'un réseau public 25 de communications. Dans ce cas, avec le téléphone C l'utilisateur doit composer une séquence de touches correspondant à ce déroutage. Lorsqu'un tel déroutage est réalisé, et lorsqu'un utilisateur d'un téléphone B appelle le téléphone A, le microprocesseur 3 lit dans la mémoire 9 l'enregistrement 10, constate que toutes les communications adressables à A sont à adresser à C, et provoque par l'intermédiaire du circuit de commutation 2 le déroutage de communications qui transitent normalement par une voie 26 reliée au téléphone A en des communications reliées par des voies 27 à une interface de sortie 28 avec le réseau de communication public 25.

Ce faisant, on aboutit à un fonctionnement selon l'état de la technique où tout le confort d'utilisation proposé par les options de l'autocommutateur est indisponible. Pour les rendre disponibles, et c'est un apport de l'invention, on s'est rendu compte que les informations d'état de la zone 18 étaient les informations d'état du téléphone A. Ce téléphone A n'est pas décroché car son utilisateur est à son domicile. Ce téléphone A renseigne le reste du réseau sur un état trompeur des possibilités de la connexion avec le téléphone A. En effet l'information en zone 18 indique que A n'est pas décroché, même si le téléphone C qui communique à la place de A est en communication. Dans l'invention sachant que du fait du reroutage provoqué par l'enregistrement 10 les circuits de commutation ont mis en service l'interface 28 on prélève les informations de signalisation disponibles à l'interface 28 pour les substituer, dans la zone 18, aux informations de signalisation relatives au poste A. Dans ces conditions le fonctionnement de l'autocommutateur 1 n'est pas du tout modifié mais il offre à l'utilisateur du téléphone C tout le confort normalement accessible avec le téléphone A.

Ainsi lorsque B appelle A, le circuit 2 déroute l'appel vers le téléphone C. Si l'utilisateur du téléphone A, qui est aussi l'utilisateur du téléphone C, signale notamment sur l'écran du terminal c qu'il accepte la communication, le réseau 24 et l'interface 23 transmettent cette acceptation à la mémoire 16. L'information 18 comporte alors une indication d'acceptation de la communication. Dans ces conditions l'autocommutateur 1 fait diffuser par l'interface 28 l'appel à destination du téléphone C tel qu'il résulte du reroutage selon l'enregistrement 10. Au moment où le téléphone C est décroché, le contenu de la mémoire 16 est modifié pour que la zone 18 comporte un état décroché du téléphone A, alors que le téléphone A n'a pas été décroché. Au cours de la conversation, l'utilisateur C peut décider d'enregistrer la conversation sur la messagerie vocale de l'autocommutateur 1, notamment dans les circuits 19. Il clique dans ce but sur l'écran de son terminal c sur l'option qui correspond à cet enregistrement. Il est à noter dans ce cas que, selon l'invention, l'enregistrement sera mémorisé dans la boîte vocale du téléphone A. Dans ce cas, la mémoire 16 est modifiée en zone 18 et le microprocesseur 3 exécute un sous-programme du jeu 8 qui correspond à cette information d'état.

Dans un autre type d'exemple, si au cours de la communication un autre utilisateur appelle le téléphone A, le microprocesseur 3 répondra, en lisant l'information de la zone 18 que l'utilisateur A est occupé (encore une fois ici alors que le téléphone A n'est pas décroché). Dans l'état de la technique l'autocommutateur 1 aurait relancé une communication, par une interface supplémentaire 29 à destination du poste téléphonique C. Le deuxième appelant aurait été informé de ce que A était occupé par l'intermédiaire du réseau de communication public 25 qui renvoie un signal occupé dans ce cas.

Avec l'invention le deuxième appelant peut organiser un rappel automatique. Dans ces conditions dès que la communication de B vers A rerouté en C est terminée, la zone 18 est mise à jour, et le microprocesseur 3, en application d'un sous programme de rappel automatique, remet en connexion ce nouvel appelant avec l'interlocuteur du téléphone A, rerouté en C. Par ailleurs au cours de ce deuxième appel, l'utilisateur du téléphone A qui se sert de son téléphone C voit sur l'écran de son terminal c que cet autre appelant essaie de le joindre. Il peut en choisissant une option sur l'écran du terminal c mettre l'appel provenant du téléphone B en attente, prendre l'appel du nouvel appelant, faire des conférences à plusieurs et ainsi de suite.

On constate dans l'invention que du fait que l'autocommutateur 1 est resté tel qu'il était conçu, tous les services proposés par cet autocommutateur 1 restent disponibles sans difficulté. Il suffit dans l'invention, dans un programme de reroutage correspondant à un renvoi, de prévoir un jeu d'instructions pour remplacer en zone 18 les informations d'état relatives à un téléphone A par les informations d'état d'un téléphone C vers lequel l'appel est rerouté.

L'invention fonctionne bien entendu dans l'autre sens, lorsque l'utilisateur C appelle. Dans ce cas il se connecte de préférence au préalable avec son terminal c via le réseau 24 et l'interface 23 sur la mémoire 16. Eventuellement il peut ainsi être connecté sur une mémoire d'annuaire et un sous-programme du jeu 8. Avec ce sous-programme il choisit l'interlocuteur qu'il veut joindre. L'établissement de la communication se passe alors en deux temps. Dans un premier temps avec le téléphone C l'utilisateur appelle l'autocommutateur 1. Dans un deuxième temps, avec la sélection opérée ci-dessus, il provoque la recherche de l'interlocuteur, par exemple B qu'il voulait joindre. L'autocommutateur met alors en relation le téléphone B avec l'interface 28 à laquelle est relié le téléphone C. Dans ce cas dans l'invention le terminal associé au téléphone B voit afficher sur son écran une information lui signalant que B est appelé par A alors qu'en fait B est appelé par un appelant extérieur C. Ce type de connexion est plus facilement établi si, avec son terminal c, l'utilisateur fait appeler par l'autocommutateur 1 à la fois son propre téléphone C et le téléphone B de son interlocuteur.

Telles qu'elles sont représentées, les liaisons entre l'interlocuteur et son entreprise, ou plus généralement le système de communications de celle-ci, passent par un réseau de transfert de données 24 et un réseau de communications public 25. Il est possible, notamment si un modem lié au terminal c possède une voie vocale de passer les deux communications, les paroles et la signalisation sur le seul canal 24.

## Revendications

1. Procédé de gestion de communications téléphoniques dans lequel
- on associe (16-18) dans une mémoire d'un système de gestion un premier terminal (a) avec un premier téléphone (A),
- on affiche sur un écran (15) du premier terminal des options de fonctionnement du premier téléphone,
- on choisit avec un clavier (20, 21) de commande du premier terminal un mode (8) de fonctionnement du premier téléphone correspondant à une option, et
- on gère (3-11) une communication du premier téléphone en fonction d'un mode choisi,
caractérisé en ce que
- on déroute (10) une communication téléphonique destinée au premier téléphone vers un deuxième téléphone ©, et
- on remplace dans la mémoire du système de gestion des informations d'état (18) du premier téléphone par des informations d'état du deuxième téléphone.

2. Procédé selon la revendication 1, caractérisé en ce que
- on connecte un deuxième terminal (c) au système de gestion et on affiche sur ce deuxième terminal les options de fonctionnement du premier téléphone.

3. Procédé selon l'une des revendications 1 à 2, caractérisé en ce que
- on connecte un deuxième terminal au système de gestion,
- on provoque le déroutage du premier téléphone à partir du deuxième terminal.

4. Procédé selon l'une des revendications 1 à 3, caractérisé en ce que
- on connecte un deuxième terminal au système de gestion,
- on vérifie des droits à modification de ce deuxième terminal
- on autorise un choix par le deuxième terminal, en lieu et place du premier terminal.

5. Procédé selon l'une des revendications 1 à 4, caractérisé en ce que
- on connecte un deuxième terminal et le deuxième téléphone au système de gestion par un même canal (24) de communication.
